# EUROPEAN PATENT SPECIFICATION

(11) **EP 0 912 344 B1**
(45) Date of publication and mention of the grant of the patent: **17.03.2004**
(21) Application number: 96933925.8
(22) Date of filing: 27.09.1996
(51) Int. Cl.: B32B 31/06, B32B 31/08, B32B 31/12, E01C 23/03, E02B 3/12

(54) **STRUCTURE FORMING METHOD AND APPARATUS**
VERFAHREN UND VORRICHTUNG ZUM HERSTELLEN VON STRUKTUREN
PROCEDE ET APPAREIL DE MISE EN FORME DE STRUCTURES

(30) Priority: 15.04.1996 WO PCT/US96/05132
(43) Date of publication of application: 06.05.1999
(73) Proprietor: Payne, LeRoy, Molt, MT 59057 (US)
(72) Inventor: Payne, LeRoy, Molt, MT 59057 (US)
(74) Representative: Milhench, Howard Leslie
(86) International application number: PCT/US1996/015499
(87) International publication number: WO 1997/038858

(56) References cited:
- WO-A-95/30541
- US-A- 1 986 871
- US-A- 4 004 782
- US-A- 4 955 759
- US-A- 5 049 006

## Description

This invention relates to a method of forming a continuous structure and apparatus and to a continuous structure produced thereby. Such method and apparatus are known from WO-A-9530541.

The present invention provides a method, and an apparatus which overcome the shortcomings of previous expedients. In addition, the method and the apparatus provide features and advantages not found in earlier technology.

According to one aspect of the present invention there is provided a method as claimed in claim 1.

According to a second aspect of the present invention there is provided an apparatus as claimed in claim 6.

The method and apparatus of the present invention may be employed by individuals with only limited mechanical skills and experience. Structures can be produced by such individuals safely and efficiently without supervision utilizing the method and apparatus of the invention. The configuration and composition of the structure can be changed easily.

The method of the invention can be modified to form a variety of different structures with the apparatus of the invention. Variations in physical dimensions, composition and surface appearance, etc. can be achieved. Even with such changes, uniform high quality can be maintained without difficulty with the method and apparatus of the present invention.

A method of the present invention for forming a continuous structure includes the steps of preselecting a liquid reactive resin forming material, a particulate solid additive material and a porous blanket. The additive particles are mixed with the liquid resin forming material substantially continuously while tumbling the materials along a generally cylindrical path in a preselected orientation. The direction of the tumbling is reversed as the materials advance along the cylindrical path. Substantially all of the additive particles are encapsulated with the resin forming material to a preselected thickness.

A pool of the resulting mixture is formed on the porous blanket while it is disposed in a preselected orientation. Part of the liquid resin forming material is migrated through the blanket substantially uniformly prior to gelling of the liquid resin forming material to form a continuous resin matrix within the structure.

A leading edge of the structure is grasped and advanced over a generally horizontally oriented supporting surface. The leading edge of the structure then is grasped along substantially its entire length and advanced away from the supporting surface along a preselected path. The structure is cut into a preselected length and the length placed into a final configuration while the length is flexible and adhesive.

The additive particles advantageously are mixed with the liquid resin forming material as they advance continuously downwardly along a cylindrical path through an elongated mixing chamber. The orientation thereof may be changed along preselected sections of the cylindrical path. The orientation of the mixing sections preferably is monitored and adjusted to maintain it within preselected specifications.

Materials may be added sequentially along preselected sections of the cylindrical path. This is especially useful with multiple component resin forming systems.

Advantageously, the mixture is deposited on the blanket in a reciprocating motion from one side to the other. A pool of the mixture preferably is confined in contact with the blanket, advantageously by introducing a second blanket such as a fibrous sheet and confining the pool of the mixture between the two blankets. In this way, both blankets become integral components of the structure.

If desired, pressure may be applied to the structure after its placement in a final configuration. Advantageously, a continuous film such as a polyethylene sheet is applied over the structure before applying pressure thereto. The pressure preferably is applied simultaneously across an entire width of the structure. A preselected pattern may be formed on a surface of the structure while pressure is applied thereto.

Benefits and advantages of the novel method, apparatus and structure of the present invention will be apparent from the following description of the accompanying drawings in which:
Figure 1 is a view in perspective of one form of mobile continuous structure forming apparatus of the present invention;
Figure 2 is a side view of the structure forming apparatus of the invention shown in Figure 1;
Figure 3 is an enlarged fragmentary side view in section of the structure forming apparatus of the invention shown in Figures 1 and 2;
Figure 4 is a schematic illustration of another form of a mixing portion of the structure forming apparatus of the invention;
Figures 5 and 6 are fragmentary cross sectional views taken along lines 5 - 5 and 6 - 6 respectively of Figure 4; and
Figure 7 is a further enlarged fragmentary cross sectional view of the structure of the invention shown in Figure 1.

As shown in the drawings, one form of novel mobile continuous structure forming apparatus 11 of the present invention includes a supporting portion 12, a raw material supplying portion 13, a mixing portion 14, a matrix forming portion 15 and a control portion 16.

The supporting portion 12 of the structure forming apparatus of the invention includes a plurality of spaced upstanding frame members 20, 21, 22, 23. The frame members are adjustable in length. A plurality of generally horizontally disposed frame sections 25, 26, 27, 28 join adjacent upper ends of the upstanding frame members. For example, as shown in the drawings, frame section 25 extends between an upper end 30 of frame member 20 and an upper end 31 of frame member 21.

Opposed frame sections 25, 27 are of adjustable length. This may be accomplished as shown by dividing a frame section into two and partially overlapping adjacent free ends within a housing 32, 33.

Spaced support sections 34, 35 extend between opposed frame sections 25, 27 and particularly between the respective housing 32 or 33 of each opposed frame section. Mixing portion 14 and matrix forming portion 15 extend downwardly adjustably from the support sections between the upstanding frame members 20 - 23. Other components (not shown) such as an operator's seat, an electrical generator, an air compressor, a hydraulic pump and the like also can be mounted on and/or suspended from the frame sections and support sections.

Pivotable carriage means 36 extend downwardly from lower ends 37 of the upstanding frame members. Advantageously, the carriage means include wheels 38 rotatable on axles 39. The carriages preferably include variable drive means 41 and include endless track members 42. Drive means 43 advantageously adjust the length of frame members 20 - 23 and adjustable frame sections 25, 27.

The mobile structure forming apparatus 11 advantageously includes four spaced upstanding frame members and four frame sections forming a quadrangular assembly as shown in the drawings. Preferably, the apparatus 11 includes jack means 44 extending downwardly between the carriage means 36.

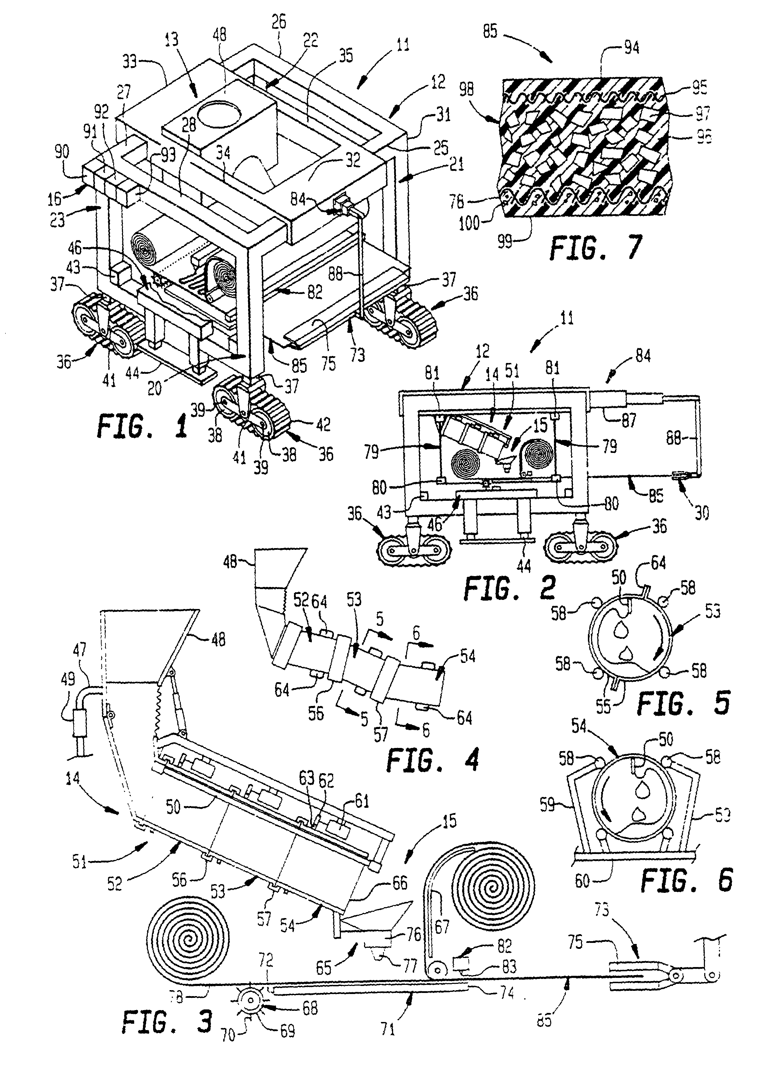

The raw material supplying portion 13 of the apparatus 11 includes a plurality of reservoirs 46 operatively connected with the supporting portion 12. The reservoirs are connected independently with the mixing portion 14 through flexible conduit means 47 (Figure 3). The raw material supplying portion advantageously also includes a gravity feed hopper 48 adjacent the mixing portion 14 and preferably heating means 49 along the length of the flexible conduit means.

The mixing portion 14 of the structure forming apparatus 11 of the invention includes an elongated mixing chamber 51 adjustably disposed between the support sections 34, 35. The mixing chamber 51 includes a plurality of adjacent axially aligned rotatable mixing sections 52, 53, 54. Advantageously, the orientation of each mixing section is adjustable with respect to that of adjacent mixing sections as shown in Figure 4.

Although the internal surfaces of the mixing sections usually are smooth, it may be desirable to utilize roughened surfaces, inwardly extending protrusions, e.g. blades, vanes, and the like. With such constructions, it is preferred that means be provided to clean the surfaces periodically. For example, blades or vanes can be retractable to remove any materials adhering thereto. Also, the mixing sections advantageously may be constructed with separable housings 55 including connecting flanges 64 (Figure 4 and 5).

The mixing sections 52 - 54 are operatively connected with slip members 56, 57. The sections of the mixing chamber are supported on spaced rollers 58 mounted on the ends of arm members 59 which extend upwardly from a base section 60 (Figure 6). Base section 60 in turn is adjustably suspended from support sections 34, 35.

The mixing portion 14 includes independent drive means for each mixing section 52 - 54. As shown in the drawings, each drive means includes a motor 61 with a sprocket 62 engaging a ring gear 63 either directly or through a chain.

The matrix forming portion 15 of the apparatus 11 includes mixture distributing means 65 adjacent an outlet 66 of the mixing chamber 51. The mixture delivery means 65 may include an elongated transversely disposed arcuate member 67 with a generally horizontal lower edge.

A first elongated structure grasping means 68 is disposed adjacent the outlet 66 of the mixing chamber 51. Advantageously, as shown, grasping means 68 includes a rotatable rod 69 with outwardly extending projections or pins 70. When an arcuate member 67 is present, rod 69 is spaced below the lower edge thereof and aligned therewith.

Generally horizontally oriented structure support means 71 has one end 72 adjacent the rod 69. Second elongated structure grasping means 73 is disposed adjacent an opposite end 74 of the structure support means 71 remote from the first structure grasping means 68. Preferably, the second grasping means 73 as shown includes a pair of elongated hinged sections 75 aligned with rod 69.

Advantageously, the mixture distributing means 65 includes actuating means 76 reciprocating a delivery port 77 across the width of a blanket 78 passing thereunder. The mixture distributing means 65 preferably also includes positioning means 79, advantageously including sensing means 80 and actuating means 81. Preferably, cutting means 82 with a blade 83 is included, particularly cutting means extending parallel to and adjacent the opposite end 74 of the support means 71.

The mixture distributing means also advantageously includes advancing means 84 for moving structure 85 along a preselected path while the structure is flexible and adhesive. Advancing means 84 as shown in the drawings preferably may include a telescoping arm assembly 87 with a cable 88 to which second grasping means 73 is attached.

If desired, pressure applying means such as a roller, belt or opposed combinations thereof (not shown) may be included. The roller, belt, etc. may have a patterning surface. Pressure may be applied to the structure to conform it to an underlying surface, to compress the structure into a more dense mass and the like.

To form a structure employing the method and apparatus of the invention as shown in the drawings, a liquid reactive resin forming material is advanced from a reservoir 46 through a conduit 47 into mixing chamber 51. Simultaneously, other minor ingredients e.g. colors, catalysts, etc. from another reservoir advance through a conduit into the mixing chamber. At the same time, a particulate solid additive material from hopper 48 enters into the rotating mixing chamber 51.

The additive particles are mixed with the liquid resin forming material substantially continuously, preferably in a proportion significantly greater than that of the resin forming material. During this mixing operation, substantially all of the additive particles are encapsulated with the liquid resin forming material to a preselected thickness.

As the solid and liquid materials advance from one mixing section 52 - 54 to next along the mixing chamber, the mixing of the materials can be influenced by changing the operating parameters within each respective section. For example, the speed of rotation and/or the inclination of a particular section can be changed and also the direction of rotation can be reversed.

Figures 5 and 6 illustrate the position of the materials at different points along the mixing chamber. Figure 5 shows the materials within mixing section 53 being rotated in a clockwise direction and Figure 6 within section 54 in a counter-clockwise direction. In the rotation of each section, as the materials reach a stationary wiper blade 50, the materials are separated from the inner surface of the mixing section and tumble to the bottom of the section. The partially mixed materials traveling upward again into contact with the blade are separated from the inner surface and tumble to the bottom of the section.

The resulting mixture being delivered from outlet 66 of the mixing chamber 51 passes downwardly through port 77 onto blanket 78. Advantageously, the treated blanket is advanced at a rate sufficient to form a continuous ribbon thereon as the port is reciprocated between the edges of the blanket 78.

Part of the liquid resin forming material is allowed to migrate through the blanket as it is advanced by first grasping means 68 onto horizontally oriented structure support 71. Migration of liquid resin forming material may continue during this step and succeeding steps as the leading edge of the resulting structure 85 reaches the opposite edge 74 of the structure support and is grasped by second grasping means 73. The second grasping means 73 shown as including a pair of hinged sections 75 operatively connected to telescoping arm assembly 87 through cable 88 draws the structure 85 along a preselected path.

When a desired preselected length of the structure 85 has reached the far edge 74 of the structure support 71, cutting means 82 is activated causing blade 83 to move across the structure from one side to the other. The cut length is carried by telescoping arm assembly 87 to an adjacent preselected location and positioned into a final configuration such as a path or ditch while the structure is flexible and adhesive. Pressure then is applied with a roller to conform the structure with the surface and into close contact therewith so that upon curing, the structure is permanently bonded thereto.

To produce high quality structures of the invention, it is important that all of the steps be carefully coordinated by control portion 16. The control portion 16 of the structure forming apparatus 11 of the invention includes programmable memory means 90 and actuating means 91 responsive thereto in combination with coordinating means 92 to control the operation of pumps, valves and drives. Preferably, the coordinating means includes a process controller 93 that initiates changes in the flows of materials and speeds of drives to bring variations therein back to the rates specified in the programs present in the memory 90.

This coordination commonly is achieved through the transmission of information such as digital pulses from monitors and/or sensors at the control components to the process controller 93. The operating information is compared with the preselected programming parameters stored in the memory 90. If differences are detected, instructions from the controller change the operation of the components to restore the various operations to the preselected processing specifications.

During the above steps, sensors 80 of positioning means 79 also are sensing the orientation of the mixing sections 52 - 54. If a deviation is detected in the specifications stored in memory 90, actuating means 91 automatically is energized to return the mixing sections to their preselected orientation.

As shown in Figure 7, a cross section of a typical structure 85 of the invention includes a thin continuous resin rich upper layer 94 over a thin fibrous sheet 95 under which is a central layer 96 including a plurality of encapsulated solid particles 97 e.g. gravel, particles from grinding discarded tires, etc. within a continuous resin matrix 98. The resin matrix extends throughout the structure from the thin resin rich upper layer 94 through fibrous sheet 95, through particle rich central layer 96 downwardly through blanket 78 and into a thinner resin rich lower layer 99 including a few very small solid particles 100 disposed primarily closely adjacent to the blanket.

Advantageously, inclusion of outer upper and/or lower plastic films (not shown) may facilitate the installation of novel structures of the invention under adverse weather conditions or below water or other liquids. Also, the flowing of resin through film openings can provide adhesion of the structure to a subsurface (not shown).

Normal maneuvering of the continuous structure forming apparatus of the invention to maintain it centered over a ditch ordinarily can be accomplished by increasing the speed of the carriages 36 on one side and/or decreasing the speed of the carriages on the other side. Major transverse changes of direction may be accomplished by pivoting the carriages 36 ninety degrees from the normal operating orientation as shown in Figure 1 using jacks 44 to raise the carriages off the ground. The apparatus then is moved sideways into a desired position at which point, the jacks 44 again raise the carriages 36 so they can be pivoted back to an orientation parallel to its original position.

The same steps can be employed to move the apparatus around obstacles such as bridges, trees, head gates, etc. To change the width of the apparatus, the two carriages on one side can be pivoted and driven away from or toward the center of the apparatus and thereby lengthen or shorten the adjustable frame sections 25 and 27.

The liquid reactive resin forming material employed to produce structures of the invention is selected to be capable of reaction to form the particular resin matrix desired in the final structure. Advantageously, the resin matrix is a thermosetting resin such as a polyurethane or polyester. Should a polyurethane be desired, one reservoir may contain an isocyanate and another reservoir may contain a polyol.

More commonly, the reservoirs may contain different partially formed materials which upon mixing interact to form the desired polyurethane. Examples of such partially formed materials include so-called "A stage" resins and "B stage" resins.

Other resin forming systems may utilize a resin forming material in one reservoir and a catalyst in a second reservoir. Additional components can be premixed with one of the resin formers, e.g. fillers, reinforcements, colors and the like.

The particulate solid additive material is mixed with the liquid reactive resin forming material substantially continuously, preferably in a proportion significantly greater than that of the resin forming material. The additive particles may be any of a wide variety of inexpensive materials readily available at a particular job site. Natural mineral particulate materials such as sand and gravel normally are available or can be produced simply by crushing rock at the site.

Also, materials such as waste or recycled materials which can be shredded or ground into particles of suitable size can be utilized. Particularly useful are particles formed by shredding or grinding discarded tires. Since the particles are encapsulated with the resin forming material and not saturated therewith, many different waste materials may be employed.

Suitable porous blankets include woven, knit, non-woven structures, etc. The blankets e.g. fabrics, mats, etc. may be formed of continuous or discontinuous fibers, yarns, slit ribbons and similar natural and synthetic fibrous materials. Reinforcing members such as ropes, cables and the like that extend longitudinally and/or transversely of the blanket centerline may be included if desired.

The fibrous sheet includes products that utilize a major proportion of short fibers oriented predominately in a single plane. Preferably, the sheet is spot bonded at spaced points over its surface to provide strength along its major plane and general structural integrity.

The above description and the accompanying drawings show that the present invention provides a novel method, apparatus and structure which overcome the shortcomings of previous expedients and in addition, provide features and advantages not found in earlier technology.

The structure produced with the method and apparatus of the invention can include major proportions of recycled, waste or other materials which are readily available at a job site. These structures are of high quality and may exhibit properties not usually found in products formed with conventional ingredients.

The method of the invention may be conducted by individuals with only limited mechanical skills and experience to produce high quality structures safely and efficiently. The method can be modified to form a variety of different structures. Variations in configuration, composition, physical dimensions and surface appearance, etc. can be achieved easily. Even with such changes, uniformity and high quality can be maintained without difficulty.

It will be apparent that various modifications can be made in the particular method, apparatus and structure described in detail above and shown in the drawings within the scope of the present invention. The method steps, apparatus components and types of materials employed can be changed to meet specific process and structural requirements. For example, the number and disposition of porous blankets and patterns can be different.

These and other changes can be made in the method, apparatus and structure of the invention provided the functioning and operation thereof are not adversely affected. Therefore, the scope of the present invention is to be limited only by the following claims.

## Claims

1. A method of forming a continuous structure (85) including the steps of:
preselecting a liquid reactive resin forming material, a particulate solid additive material and a porous blanket (78);
mixing said additive particles (97) with said liquid resin forming material substantially continuously while tumbling said materials along a cylindrical path in a preselected orientation;
encapsulating substantially all of said additive particles (97) with said liquid resin forming material to a preselected thickness;
forming a pool of the resulting mixture on the porous blanket (78) and allowing art of the liquid resin forming material to migrate through said blanket (78) substantially uniformly prior to gelling of the liquid resin forming material to form a continuous resin matrix (98) within the structure (85), cutting the structure (85) into a preselected length, placing said preselected structure length into a final configuration while the length is flexible and adhesive, **characterised by** reversing the direction of the tumbling as the materials advance along the cylindrical path, grasping the blanket (78) with a first grasping means (68) to advance the blanket onto a generally horizontally orientated supporting surface; and
grasping the leading edge of the structure with second grasping means (73) along substantially its entire length so as to advance the leading edge away from the support surface along a preselected path.

2. A method of forming a continuous structure according to claim 1 including changing orientation along preselected sections of said cylindrical path (52,53,54).

3. A method of forming a continuous structure according to claim 1 including adding materials along preselected sections of said cylindrical path (52,53,54).

4. A method of forming a continuous structure according to claim 1 including the step of introducing a second blanket and confining a pool of said mixture between said two blankets.

5. A method of forming a continuous structure according to claim 2 wherein orientation of said mixing sections (52-54) is monitored and adjusted to maintain said sections within preselected specifications.

6. Mobile continuous structure forming apparatus including a supporting portion (12), a raw material supplying portion (13), a mixing portion (14), a matrix forming portion (15) and a control portion (16); said supporting portion including a plurality of spaced upstanding frame members (20-23) of adjustable length, a plurality of generally horizontally disposed frame sections (25-28) joining adjacent upper ends of said upstanding frame members, one pair of opposed frame sections (25,27) being of adjustable length, support sections (34,35) extending between said adjustable opposed pair of said frame sections (25,27), pivotable carriage means (36) extending downwardly from lower ends of said upstanding frame members (20-23); said raw material supplying portion (13) including a plurality of reservoirs (46) operatively connected with said supporting portion (12), said reservoirs being connected independently with said mixing portion through flexible conduit means (47); said mixing portion (14) extending from said support sections between said spaced upstanding frame members, said mixing portion (14) including an elongated mixing chamber (51) adjustably disposed between said support sections (34,35); said matrix forming portion (15) including mixture distributing means (65) extending adjustably downwardly from said support sections and being disposed adjacent an outlet of said mixing chamber, **characterized by** that said mixing chamber (51) includes a plurality of adjacent axially aligned rotatable mixing sections (52-54), independent drive means (61-63) rotating each of said mixing sections about a central axis and further **characterised by** a first elongated structure grasping means (68) disposed adjacent said mixing chamber outlet (66) and spaced therefrom, generally horizontally oriented structure support means (71) having one edge adjacent said first structure grasping means, second elongated structure grasping means (73) disposed adjacent an opposite edge of said structure support means remote from said first structure grasping means; said control portion including programmable memory means, co-ordinating means, sensing means, actuating means, and circuitry transmitting signals from said sensing means (80) to said co-ordinating means for comparison with said memory means and activation of said actuating means (81) to form and place a continuous structure into a final configuration while it is flexible and adhesive.

7. Mobile continuous structure forming apparatus according to claim 6 including positioning means adjusting the orientation of each mixing section with respect to adjacent mixing sections.

8. Mobile continuous structure forming apparatus according to claim 7 wherein said positioning means includes sensing means and actuating means.

9. Mobile continuous structure forming apparatus according to claim 6 wherein said mixing sections (52-54) are operatively connected with slip members.

10. Mobile continuous structure forming apparatus according to claim 6 wherein said second elongated structure grasping means (73) includes a pair of hinged sections (75).

## Patentansprüche

1. Verfahren zur Bildung einer kontinuierlichen Struktur (85) mit folgenden Schritten:
Vorwählen eines flüssigen reaktiven harzbildenden Materials, eines teilchenartigen festen Zusatzmaterials und einer porösen Decke (78),
im wesentlichen kontinuierliches Mischen der Zusatzteilchen (97) mit dem flüssigen harzbildenden Material, während die Materialien entlang eines zylindrischen Wegs in vorbestimmter Orientierung einer Trommelbearbeitung unterworfen werden,
Umschließen im wesentlichen aller Zusatzteilchen (97) mit dem flüssigen harzbildenden Material bis zu einer vorgewählten Dicke,
Ausbilden eines Bads der sich ergebenden Mischung auf der porösen Decke (78) und Zulassen, daß ein Teil des flüssigen harzbildenden Materials durch die Decke (78) im wesentlichen gleichförmig hindurch wandert, bevor das flüssige harzbildende Material unter Bildung einer kontinuierlichen Harzmatrix (98) innerhalb der Struktur (85) geliert, Schneiden der Struktur (85) zu einem Stück vorgewählter Länge, Anordnen des vorgewählten Strukturstücks in einer endgültigen Anordnung, während das Stück flexibel und klebrig ist,
**gekennzeichnet durch** ein Umdrehen der Orientierung der Trommelbearbeitung, während die Materialien entlang des zylindrischen Wegs fortschreiten, Greifen der Decke (78) mit einer ersten Greifeinrichtung (68), um diese auf eine im wesentlichen horizontal ausgerichtete Stützfläche vorzubewegen, und
Greifen der vorderen Kante der Struktur entlang im wesentlichen ihrer ganzen Länge mittels einer zweiten Greifeinrichtung (73), um die vordere Kante entlang eines vorgewählten Wegs von der Stützfläche weg vorzubewegen.

2. Verfahren nach Anspruch 1, das die Änderung der Orientierung entlang vorgewählter Abschnitte des zylindrischen Wegs (52, 53, 54) beinhaltet.

3. Verfahren nach Anspruch 1, das ein Hinzufügen von Materialien entlang vorgewählter Abschnitte des zylindrischen Wegs (52, 53, 54) beinhaltet.

4. Verfahren nach Anspruch 1 mit einem Schritt zum Einbringen einer zweiten Decke und zum Begrenzen eines Bads der genannten Mischung zwischen den beiden Decken.

5. Verfahren nach Anspruch 2, wobei die Orientierung der Mischabschnitte (52 bis 54) überwacht und eingestellt wird, um die Abschnitte innerhalb vorgewählter Vorgaben zu halten.

6. Mobile Vorrichtung zur Ausbildung einer kontinuierlichen Struktur mit einem Tragbereich (12), einem Rohmaterial-Zuführbereich (13), einem Mischbereich (14), einem matrixbildenden Bereich (15) und einem Steuerbereich (16); wobei der Tragbereich mehrere mit Abstand zueinander aufrecht stehende Rahmenelemente (20 bis 23) einstellbarer Länge, mehrere im wesentlichen horizontal angeordnete Rahmenabschnitte (25 bis 28), die benachbarte obere Enden der aufrecht stehenden Rahmenelemente verbinden und von denen ein Paar gegenüberliegender Rahmenabschnitte (25, 27) eine einstellbare Länge aufweist, zwischen dem einstellbaren gegenüberliegenden Paar Rahmenabschnitte (25, 27) verlaufende Tragabschnitte (34, 35) und von den unteren Enden der aufrecht stehenden Rahmenelemente (20 bis 23) abwärts verlaufende schwenkbare Wageneinrichtungen (36) aufweist; wobei der Rohmaterial-Zuführbereich (13) mehrere mit dem Tragbereich (12) betriebsmäßig verbundene Reservoirs (46) aufweist, die über flexible Leitungseinrichtungen (47) unabhängig voneinander mit dem Mischbereich verbunden sind; wobei der Mischbereich (14) zwischen den beabstandeten aufrecht stehenden Rahmenelementen von den Tragabschnitten ausgeht und eine zwischen den Tragabschnitten (34, 35) einstellbar angeordnete längliche Mischkammer (51) aufweist; wobei der matrixbildende Bereich (15) eine Mischungsverteilungseinrichtung (65) beinhaltet, die von den Tragabschnitten einstellbar nach unten verläuft und bei einem Auslaß der Mischkammer angeordnet ist,
**dadurch gekennzeichnet, daß** die Mischkammer (51) mehrere benachbarte axial ausgerichtete drehbare Mischabschnitte (52 bis 54) und eine unabhängige Antriebseinrichtung (61 bis 63) zum Drehen der jeweiligen Mischabschnitte um eine Mittelachse aufweist, und außerdem **gekennzeichnet durch** eine erste längliche Strukturgreifeinrichtung (68), die bei und mit Abstand zu dem Mischkammer-Auslaß (66) angeordnet ist, eine im wesentlichen horizontal ausgerichtete Strukturstützeinrichtung (71) mit einer Kante bei der ersten Strukturgreifeinrichtung, und eine zweite längliche Strukturgreifeinrichtung (73), die bei einer gegenüberliegenden Kante der Strukturstützeinrichtung von der ersten Strukturgreifeinrichtung entfernt angeordnet ist; wobei der Steuerbereich eine programmierbare Speichereinrichtung, eine Koordinierungseinrichtung, eine Erfassungseinrichtung, eine Betätigungseinrichtung und eine Schaltung zur Übertragung von Signalen von der Erfassungseinrichtung (80) zu der Koordinierungseinrichtung für einen Vergleich mit der Speichereinrichtung und zur Aktivierung der Betätigungseinrichtung (81), um eine kontinuierliche Struktur, während sie flexibel und klebrig ist, in einer endgültigen Anordnung auszubilden und abzulegen, aufweist.

7. Vorrichtung nach Anspruch 6 mit einer Positioniereinrichtung zum Einstellen der Orientierung des jeweiligen Mischabschnitts bezüglich benachbarter Mischabschnitte.

8. Vorrichtung nach Anspruch 7, wobei die Positioniereinrichtung eine Erfassungseinrichtung und eine Betätigungseinrichtung aufweist.

9. Vorrichtung nach Anspruch 6, wobei die Mischabschnitte (52 bis 54) betriebsmäßig mit Gleitelementen verbunden sind.

10. Vorrichtung nach Anspruch 6, wobei die zweite längliche Strukturgreifeinrichtung (73) ein Paar gelenkiger Abschnitte (75) aufweist.

## Revendications

1. Procédé de formation d'une structure continue (85), comprenant les étapes consistant à :
présélectionner un matériau de formation de résine réactive liquide, un matériau d'additif solide en particules et une couverture poreuse (78) ;
mélanger lesdites particules d'additif (97) audit matériau de formation de résine liquide de façon sensiblement continue tout en agitant lesdits matériaux le long d'un trajet cylindrique selon une orientation présélectionnée ;
encapsuler sensiblement toutes lesdites particules d'additif (97) avec ledit matériau de formation de résine liquide sous une épaisseur présélectionnée ;
former un bain du mélange résultant sur la couverture poreuse (78) et laisser une partie du matériau de formation de résine liquide migrer à travers ladite couverture (78) de façon sensiblement uniforme avant de produire le gel du matériau de formation de résine liquide de façon à former une matrice de résine continue (98) à l'intérieur de la structure (85), couper la structure (85) à une longueur présélectionnée, disposer ladite longueur de structure présélectionnée sous une configuration finale pendant que la longueur est souple et adhésive, **caractérisé par** l'inversion de la direction de l'agitation lorsque les matériaux avancent le long du trajet cylindrique, le fait de saisir la couverture (78) à l'aide de premiers moyens de saisie (68) pour faire avancer la couverture sur une surface de support orientée de façon globalement horizontale ; et
saisir le bord avant de la structure à l'aide de deuxièmes moyens de saisie (78) sensiblement le long de la totalité de sa longueur de façon à faire avancer le bord avant pour l'éloigner de la surface de support le long d'un trajet présélectionné.

2. Procédé de formation d'une structure continue selon la revendication 1, comprenant le changement d'orientation de long de parties présélectionnées dudit trajet cylindrique (52, 53, 54).

3. Procédé de formation d'une structure continue selon la revendication 1, comprenant le rajout de matériaux le long de parties présélectionnées dudit trajet cylindrique (52, 53, 54).

4. Procédé de formation d'une structure continue selon la revendication 1, comprenant l'étape constituant à introduire une deuxième couverture et à confiner un bain dudit mélange entre lesdites deux couvertures.

5. Procédé de formation d'une structure continue selon la revendication 2, dans lequel l'orientation desdites sections de mélange (52 à 54) est contrôlée et ajustée de façon à maintenir lesdites sections à l'intérieur de caractéristiques présélectionnées.

6. Dispositif de formation d'une structure continue mobile, comprenant une partie de support (12), une partie de délivrance de matière première (13), une partie de mélange (14), une partie de formation de matrice (15) et une partie de commande (16) ; ladite partie de support comprenant une pluralité d'éléments de cadre dressés vers le haut espacés (20 à 23) de longueur réglable, une pluralité de sections de cadre disposées de façon globalement horizontale (25 à 28) rejoignant des extrémités supérieures adjacentes desdits éléments de cadre dressés vers le haut, une paire de sections de cadre opposées (25, 27) ayant une longueur réglable, des sections de support (34, 35) s'étendant entre ladite paire opposée réglable desdites sections de cadre (25, 27), des moyens formant chariot pouvant pivoter (36) s'étendant vers le bas à partir d'extrémités inférieures desdits éléments de cadre dressés vers le haut (20 à 23) ; ladite partie de délivrance de matière première (13) comprenant une pluralité de réservoirs (46) reliés de façon opérationnelle à ladite partie de support (12), lesdits réservoirs étant reliés de façon indépendante à ladite partie de mélange par l'intermédiaire de moyens formant conduit souple (47) ; ladite partie de mélange (14) s'étendant à partir desdites sections de support entre lesdits éléments de cadre dressés vers le haut espacés, ladite partie de mélange (14) comprenant une chambre de mélange allongée (51) disposée de façon réglable entre lesdites sections de support (34, 35) ; ladite partie de formation de matrice (15) comprenant des moyens de distribution de mélange (65) s'étendant de façon réglable vers le bas à partir desdites sections de support et étant disposés au voisinage d'un orifice de sortie de ladite chambre de mélange, **caractérisé en ce que** ladite chambre de mélange (51) comprend une pluralité de sections de mélange pouvant tourner, axialement alignées, et adjacentes (52 à 54), des moyens d'entraînement indépendants (61 à 63) faisant tourner chacune desdites sections de mélange autour d'un axe central, et **caractérisé de plus par** des premiers moyens de saisie de structure allongés (68) disposés au voisinage dudit orifice de sortie de chambre de mélange (66) et espacés de celui-ci, des moyens de support de structure orientés de façon globalement horizontale (71), comportant un bord adjacent auxdits premiers moyens de saisie de structure, des deuxièmes moyens de saisie de structure allongés (73), disposés au voisinage d'un bord opposé desdits moyens de support de structure éloigné desdits premiers moyens de saisie de structure ; ladite partie de commande comprenant des moyens formant mémoire programmable, des moyens de coordination, des moyens de détection, des moyens d'actionnement, et des circuits transmettant des signaux desdits moyens de détection (80) auxdits moyens de coordination pour une comparaison avec lesdits moyens formant mémoire et une activation desdits moyens d'actionnement (81) de façon à former et à mettre une structure continue sous une configuration finale pendant qu'elle est souple et adhésive.

7. Dispositif de formation de structure continue mobile selon la revendication 6, comprenant des moyens de positionnement réglant l'orientation de chaque section de mélange par rapport à des sections de mélange adjacentes.

8. Dispositif de formation de structure continue mobile selon la revendication 7, dans lequel lesdits moyens de positionnement comprennent des moyens de détection et des moyens d'actionnement.

9. Dispositif de formation de structure continue mobile selon la revendication 6, dans lequel lesdites sections de mélange (52 à 54) sont reliées de façon opérationnelle par des éléments de glissement.

10. Dispositif de formation de structure continue mobile selon la revendication 6, dans lequel lesdits deuxièmes moyens de saisie de structure allongés (73) comprennent une paire de sections articulées (75).
